# EUROPÄISCHE PATENTANMELDUNG

(11) **EP 3 584 145 A1**
(43) Veröffentlichungstag der Anmeldung: **25.12.2019**
(21) Anmeldenummer: 18178263.2
(22) Anmeldetag: 18.06.2018
(51) Int. Cl.: B62D 33/04

(54) **PANEEL UND AUFBAU EINES NUTZFAHRZEUGS FÜR DEN KÜHLTRANSPORT**

(71) Anmelder: Schmitz Cargobull AG, 48341 Altenberge (DE)
(72) Erfinder: Schäfer, Dennis, 48249 Dülmen (DE); Westhoff, Ludger, 46354 Südlohn (DE)
(74) Vertreter: Cohausz & Florack

(57) **Zusammenfassung**

Beschrieben und dargestellt ist ein Paneel (9,40) zur Bildung eines Aufbaus (2,42) eines Nutzfahrzeugs (1), insbesondere eines Lastkraftwagens, Anhängers oder Sattelaufliegers, mit zwei äußeren Decklagen (12,13) und einer zwischen den Decklagen (12,13) angeordneten Kernschicht (14,45), umfassend einen geschäumten Kunststoff, wobei an wenigstens einer umlaufenden Schmalseite (18,31,49,52) des Paneels (9,40) ein wenigstens abschnittsweise den Rand des Paneels (9,40) bildendes Randprofil (19,51) angeordnet ist. Damit eine einfache kostengünstige und fehlerärmere Montage bereitgestellt werden kann, ist vorgesehen, dass das Randprofil (19,51) ein einer Decklage (13) zugeordnetes Grundprofilelement (20) und ein der anderen Decklage (12) zugeordnetes Abschlussprofilelement (21,43) umfasst und dass das Abschlussprofilelement (21,43) in wenigstens einer Montagenut (22,23) des Grundprofilelements (20) formschlüssig eingeschoben ist.

## Beschreibung

Die Erfindung betrifft ein Paneel zur Bildung eines Aufbaus eines Nutzfahrzeugs, insbesondere eines Lastkraftwagens, Anhängers oder Sattelaufliegers, mit zwei äußeren Decklagen und einer zwischen den Decklagen angeordneten Kernschicht, umfassend einen geschäumten Kunststoff, wobei an wenigstens einer umlaufenden Schmalseite des Paneels ein wenigstens abschnittsweise den Rand des Paneels bildendes Randprofil angeordnet ist. Ferner betrifft die Erfindung einen Aufbau eines Nutzfahrzeugs, insbesondere eines Lastkraftwagens, Anhängers oder Sattelaufliegers, mit wenigstens zwei Paneelen, von denen wenigstens ein Paneel ein Paneel der genannten Art darstellt. Zudem betrifft die Erfindung eine Nutzfahrzeuggruppe umfassend zwei Nutzfahrzeuge, insbesondere Lastkraftwagen, Anhänger oder Sattelauflieger, jeweils mit einem Aufbau der genannten Art.

Nutzfahrzeuge der vorgenannten Art können beispielsweise Lastkraftwagen, Anhänger und Sattelauflieger sein. Dabei sind die Nutzfahrzeuge insbesondere für den Transport von Gütern, wie Stückgüter, im öffentlichen Straßenverkehr vorgesehen. Zu diesem Zweck weisen die Nutzfahrzeuge unterschiedliche Arten von Aufbauten auf, welche Laderäume zur Aufnahme der zu transportierenden Güter bereitstellen. Es sind beispielsweise sogenannte Planenaufbauten bekannt, welche wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern.

Bei sogenannten Kofferaufbauten sind dagegen die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können. Die Seitenwände, das Dach und die Stirnwand, sowie bedarfsweise der Boden, von Kofferaufbauten sind in der Regel in Form von mehrschichtigen Paneelen aufgebaut, die strukturgebende Decklagen und dazwischen eine Kernlage aus einem geschäumten Kunststoff umfassen. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport geeignet. Dann sind die Aufbauten zudem mit einer sogenannten Kältemaschine zum Kühlen des Laderaums versehen.

Kühltransporte müssen je nach den transportierten Gütern unterschiedlichen Anforderungen genügen. Beim Transport von tiefgekühlten Lebensmitteln muss die Temperatur des Laderaums deutlich geringer sein (z.B. -20°C), als dies beispielsweise beim Transport von frischen Lebensmitteln erforderlich ist (z.B. 0°C). Um diesem Umstand Rechnung zu tragen, müssen die Paneele entsprechender Nutzfahrzeuge beispielsweise ausreichend breite Kernlagen aufweisen, um eine ausreichend thermische Isolation auch für den Transport bei sehr geringer Laderaumtemperatur bereitzustellen. Andernfalls können auch unterschiedliche Nutzfahrzeuge mit unterschiedlich dicken Kernlagen gefertigt werden, je nachdem welcher Transport mit den Nutzfahrzeugen beabsichtig ist. Auf diese Weise können in vielen Fällen Kosten eingespart und größere Laderäume bereitgestellt werden. Auf der anderen Seite ist dies mit einem erhöhten Fertigungsaufwand verbunden. Paneele mit unterschiedlicher Dicke können nämlich nicht ohne Weiteres auf dieselbe Weise miteinander zu Aufbauten verbunden werden.

Die einzelnen Paneele müssen zur Bildung eines Kofferaufbaus mit anderen Paneelen und Anbauteilen verbunden werden, wobei es sich bei den Anbauteilen um Teile eines Rückwandrahmens, Teile des Bodens oder aber mit einem weiteren Paneel verbundene Anschlussteile handeln kann. Die Paneele werden dabei an bestimmten Schmalseiten mit Randprofilen versehen, die dort wenigstens abschnittsweise den Rand der Paneele bilden. Da die Paneele typischerweise rechteckig ausgebildet sind, weist jedes Paneel regelmäßig vier insgesamt umlaufende Schmalseiten auf. Die Innenseiten und die Außenseiten der Paneele werden dagegen wenigstens im Wesentlichen von den Decklagen gebildet. Für das Verbinden der Paneele und Anbauteile eines Aufbaus, insbesondere eines Kofferaufbaus, sind bereits unterschiedliche Verbindungen bekannt. So werden teilweise Profilverbindungen eingesetzt, die als Nut/Feder-Verbindung aus zwei korrespondierenden Verbindungsprofilen gebildet werden. Durch die korrespondierend ausgebildeten Nuten und Federn wird das positionsgenaue Fügen der Profilverbindungen vereinfacht. Zudem können die Verbindungsprofile der Profilverbindungen noch miteinander verklebt werden, um eine dauerhafte Verbindung zu erhalten. Um Aufbauten aus Paneelen unterschiedlicher Dicke bilden zu können, müssen die Verbindungen der Paneele an die jeweiligen Abmessungen angepasst werden. Dies führt letztlich zu einem höheren Fertigungsaufwand, höheren Produktionskosten für die verwendeten Verbindungselemente und zu einem höheren Ausschuss durch fehlerhafte Montage der Verbindungselemente und Paneele untereinander.

Daher liegt der vorliegenden Erfindung die Aufgabe zugrunde, das Paneel, den Aufbau und die Nutzfahrzeuggruppe jeweils der eingangs genannten und zuvor näher beschriebenen Art derart auszugestalten und weiterzubilden, dass eine einfache kostengünstige und fehlerärmere Montage bereitgestellt werden kann.

Diese Aufgabe ist bei einem Paneel nach dem Oberbegriff von Anspruch 1 dadurch gelöst, dass das Randprofil ein einer Decklage zugeordnetes Grundprofilelement und ein der anderen Decklage zugeordnetes Abschlussprofilelement umfasst und dass das Abschlussprofilelement in wenigstens einer Montagenut des Grundprofilelements formschlüssig eingeschoben ist.

Die Aufgabe ist zudem bei einem Aufbau nach dem Oberbegriff von Anspruch 12 dadurch gelöst, dass wenigstens ein Paneel ein Paneel nach einem der Ansprüche 1 bis 10 ist.

Durch die Zweiteilung des Randprofils zwischen der einen Decklage und der gegenüberliegenden Decklage des Paneels in ein Grundprofilelement und ein Abschlussprofilelement, wobei jedes Profilelement einer anderen Decklage zugeordnet ist, können sehr einfach, schnell und kostengünstig unterschiedlich dicke Paneele bzw. Aufbauten mit unterschiedlich dicken Paneelen gebildet werden. Es muss insbesondere nicht für jedes Paneel ein speziell abgestimmtes Randprofil bereitgehalten werden. Es können beispielsweise sehr unterschiedliche Paneele gebildet werden, indem lediglich das Grundprofilelement oder lediglich das Abschlussprofilelement ausgetauscht wird. Das jeweils übrige Element kann aber in gleicher Weise verwendet werden. Wenn beispielsweise das Abschlussprofilelement sehr einfach ausgebildet wird, weil etwa wenigstens ein Großteil der Funktionalität des Randprofils, insbesondere die Verbindungsmittel zum Verbinden mit weiteren Paneelen, durch das Grundprofilelement bereitgestellt wird, können einfach und kostengünstig unterschiedliche Abschlussprofilelemente bereitgehalten werden. Von dem Grundprofilelement muss dann jedoch bedarfsweise nur eine immer gleiche Art bereitgehalten werden. Wenn dies gewünscht und bevorzugt ist, können auch mehrere Arten von Grundprofilen bereitgehalten werden, etwa um die Variationsbreite bei der Bildung von Paneelen zu vergrößern. Es kann aber dennoch mit einer bestimmten Anzahl unterschiedlicher Arten von Grundprofilen infolge der Abschlussprofilelemente auf einfache und kostengünstige Weise eine deutlich größere Anzahl unterschiedlicher Arten von Paneelen bereitgestellt werden. Besonders einfach und kostengünstig ist es dabei, wenn die Abschlussprofilelemente als Streifen und/oder mit einem rechteckigen Querschnitt ausgebildet werden.

Der geschäumte Kunststoff der Kernlage weist aus Gründen der Isolation vorzugsweise sehr viele kleine geschlossene Poren auf. Als Material hat sich insbesondere die Verwendung von Polyurethan (PU) bewährt. Dieses oder vergleichbare Materialien lassen sich zum möglichst vollständigen Ausfüllen der Kernlage zwischen den Decklagen ausschäumen. Die Kernlage muss also nicht vorkonfektioniert und dann in das Paneel eingelegt werden.

Bei den Aufbauten handelt es sich insbesondere um Kofferaufbauten ebenso wie es sich bei den Nutzfahrzeugen bevorzugt um Lastkraftwagen mit einem zulässigen Gesamtgewicht zwischen etwa 3 und 6 Tonnen handeln kann. Entsprechende Nutzfahrzeuge werden auch als Lieferwagen oder Zustellfahrzeuge bezeichnet, da diese oft zum Liefern von Gütern oder Sendungen an mehrere Endkunden, und zwar bedarfsweise gewerbliche als auch private Endkunden genutzt werden. Bei Nutzfahrzeugen, die motorisch angetrieben und direkt mit dem Aufbau versehen sind, besteht für Hersteller ein erheblicher Kostendruck, weshalb Lösungen, die sich beispielsweise für Sattelauflieger bewährt haben, kostenmäßig nicht unbedingt auf kleinere Aufbauten übertragen werden können. Bei Anhängern oder Sattelaufliegern kommen noch weitere Kostenfaktoren und zudem auch weitere Anforderungen hinzu, die bei kleineren Aufbauten nicht in gleicher Weise von Bedeutung sein müssen.

Der besseren Verständlichkeit halber und zur Vermeidung unnötiger Wiederholungen werden nachfolgend, das Paneel, der Aufbau und die Gruppe von Nutzfahrzeugen gemeinsam beschrieben, ohne jeweils im Einzelnen zwischen dem Paneel, dem Aufbau und der Gruppe von Nutzfahrzeugen zu unterscheiden. Für den Fachmann ergibt sich jedoch anhand des Kontextes, welches Merkmal jeweils hinsichtlich des Paneels, des Aufbaus und der Gruppe von Nutzfahrzeugen besonders bevorzugt ist.

Bei einer ersten besonders bevorzugten Ausgestaltung des Paneels ist das Abschlussprofilelement in einer von wenigstens zwei korrespondierend zueinander ausgebildeten, insbesondere in die gleiche Richtung geöffneten, und in einer Richtung senkrecht zum Rand und parallel zum Paneel voneinander beabstandeten Montagenuten des Grundprofilelements formschlüssig eingeschoben. Dann können mit den gleichen Profilelementen wenigstens zwei unterschiedliche Randprofile gebildet werden, die jeweils der gewünschten Paneeldicke und damit Dicke der Kernlage Rechnung tragen. Zur Bildung unterschiedlicher Paneele kann das Abschlussprofilelement in einer von wenigstens zwei korrespondierend zueinander ausgebildeten Montagenuten formschlüssig eingeschoben werden, je nachdem welche Art Aufbau gefertigt werden soll. Unterschiedliche Paneele lassen sich so sehr einfach und kostengünstig fertigen.

Damit ansonsten entsprechend gleichartige Randprofile gebildet werden, sind die wenigstens zwei Montagenuten vorzugsweise in die gleiche Richtung geöffnet. Zudem ist es bevorzugt, wenn die wenigstens zwei Montagenuten in einer Richtung senkrecht zum Rand und parallel zum Paneel voneinander beabstandet sind. Somit kann die Zweiteilung des Randprofils und die Zuordnung des Abschlussprofilelements zur jeweiligen Montagenut weniger der Anpassung der Paneeldicke bzw. der Dicke der Kernlage, sondern eher der Verbindung des Paneels mit unterschiedlich dicken anderen Paneelen zu einem Aufbau dienen. Die Dicke des Paneels könnte einfach durch die Breite des Abschlussprofilelements variiert werden. Durch die Wahl der Montagenut wird dagegen das Abschlussprofilelement senkrecht zur Schmalseite und parallel zum Paneel versetzt und so der Abschluss einer Schmalseite bzw. des Randprofils an die Dicke des dort anzubindenden anderen Paneels angepasst. Auf diese Weise können die äußeren, typischerweise genehmigungsrechtlich vorgegebenen Abmessungen der Aufbauten stets ausgenutzt werden, und zwar unabhängig davon, ob dickere oder dünnere Paneele verbaut werden sollen. Es können also letztlich Aufbauten und Nutzfahrzeuge bereitgestellt werden, bei denen die Abschlussprofilelemente in unterschiedliche Montagenuten ansonsten baugleicher Grundprofilelemente eingeschoben sind, um jeweils unterschiedliche dicke Paneele in geeigneter Weise anbinden zu können.

Die Verwendung von Grundprofilelementen von zwei entsprechenden Montagenuten ist bevorzugt aber keinesfalls zwingend. Es können auch drei, vier oder sogar mehr Montagenuten pro Grundprofilelement vorgesehen sein. Um jedoch die Variationsbreite der zu bildenden Aufbauten nicht zu groß werden zu lassen und damit die Herstellungskosten zu begrenzen, kann eine geringere Anzahl an Montagenuten grundsätzlich bevorzugt sein, auch wenn eine größere Anzahl Montagenuten eine höhere Flexibilität bei der Herstellung der Aufbauten ermöglicht.

Wenn vorliegend von korrespondierenden Montagenuten die Rede ist, so wird dies nicht so verstanden, dass die Nuten miteinander verbunden werden können. Es ist vielmehr gemeint, dass die Montagenuten gleichartig oder sogar gleich ausgebildet sind. Unterschiede sind zwar grundsätzlich zulässig, wenn auch nicht unbedingt bevorzugt. Die Gleichartigkeit soll jedoch gewährleisten, dass ein Abschlussprofilelement, ohne größere Anpassungen vornehmen zu müssen, wahlweise mit der einen Montagenut oder mit wenigstens einer anderen Montagenut durch Einschieben verbunden werden kann. Man könnte den Begriff korrespondierend also auch als einander entsprechend auffassen.

Alternativ oder zusätzlich kann an wenigstens zwei, vorzugsweise wenigstens drei, insbesondere an wenigstens vier, umlaufenden Schmalseiten des Paneels jeweils ein solches wenigstens abschnittsweise den Rand des Paneels bildendes Randprofil angeordnet sein. Auf diese Weise können an mehreren Schmalseiten des Paneels und auf die beschriebene Weise weitere Paneele oder andere Anbauteile angebunden werden, was die Herstellung weiter vereinfacht und zu einer weiteren Kostenreduktion beiträgt. Auch in diesem Falle ist es besonders bevorzugt, wenn die entsprechenden Randprofile jeweils ein einer Decklage zugeordnetes Grundprofilelement und ein der anderen Decklage zugeordnetes Abschlussprofilelement umfassen, wobei dann die Abschlussprofilelemente jeweils in einer Montagenut oder jeweils in einer von wenigstens zwei korrespondierend zueinander ausgebildeten, insbesondere in die gleiche Richtung geöffneten und in einer Richtung senkrecht zum Rand und parallel zum Paneel voneinander beabstandeten, Montagenuten des Grundprofilelements formschlüssig eingeschoben sind. Somit lässt sich jede beliebige Schmalseite auf die beschriebene Weise an die Dicke des Paneels selbst und/oder des dort anzubindenden Paneels anpassen. Bedarfsweise können so auch problemlos eine Schmalseite mit einem dickeren und eine andere Schmalseite mit einem dünneren Paneel verbunden werden. Dann können die entsprechenden Abschlussprofilelemente in unterschiedlich weit außen zum Grundprofil vorgesehenen Montagenuten eingeschoben sein, also beispielsweise etwa dort, wo das anzubindende Paneel endet.

Besonders einfach ist es konstruktiv, wenn das Grundprofilelement nicht nur einer Decklage zugeordnet, sondern mit einer Decklage verbunden ist. Dabei ist es für eine Verbindung mit einem anderen Paneel auch bevorzugt, wenn das Grundprofilelement der äußeren Decklage bezogen auf den Aufbau zugeordnet ist. Konstruktiv ist es ebenso bevorzugt, wenn das Abschlussprofilelement mit einer Decklage verbunden ist, wobei es sich dann weiter vorzugweise um die andere Decklage handelt, die also nicht dem Grundprofilabschnitt zugeordnet ist. Mithin ist es grundsätzlich bevorzugt, wenn das Abschlussprofilelement der bezogen auf den Aufbau inneren Decklage zugeordnet ist. In dieser Richtung machen sich die Dickenvariationen der Paneele bevorzugt bemerkbar. Auch ist es konstruktiv, sowohl für die Fertigung der Grundprofilelemente als auch für die Montage der Randprofile, zweckmäßig, wenn sich die wenigstens eine Montagenut des Grundprofilelements sich wenigstens im Wesentlichen über die gesamte Länge des Randprofils, also in der entsprechenden Längsrichtung erstreckt. Es kann aus denselben Gründen auch vorgesehen sein, dass sich die die wenigstens eine Montagenut wenigstens im Wesentlichen über die gesamte zugehörige Schmalseite erstreckt. Alternativ ist das Fügen der Randprofile besonders einfach und rasch möglich, wenn die wenigstens eine Montagenut des Grundprofilelements in einer Richtung wenigstens im Wesentlichen senkrecht zum Paneel geöffnet ist. Die wenigstens eine Montagenut kann sich mithin parallel zum Randprofil erstrecken.

Um über die Wahl des Abschlussprofilelements bzw. durch dessen Zuschnitt eine hohe Flexibilität für die Herstellung unterschiedlicher Paneele zu gewinnen, bietet es sich an, wenn sich das Abschlussprofilelement über wenigstens 30%, vorzugsweise wenigstens 50%, insbesondere wenigstens 70%, der Breite des Randprofils, den äußeren Abschluss des Randprofils bildet. Alternativ oder zusätzlich kann sich das Abschlussprofilelement über wenigstens 50%, vorzugsweise wenigstens 70%, insbesondere wenigstens 90%, der Breite des Randprofils erstrecken. So kann letztlich die Dicke des Paneels in sehr weitem Maße variiert werden, da dies wenigstens im Wesentlichen nur Auswirkungen auf die Dimension, insbesondere die Breite, des wenigstens einen Abschlussprofilelements hat.

Um Herstellungskosten zu sparen, bedarfsweise die Abschlussprofilelemente problemlos von einem Halbzeug in der gewünschten Breite ablängen zu können oder die Abschlussprofilelemente einfach zuschneiden zu können, bietet es sich an, das Abschlussprofilelement streifenförmig auszubilden. Besonders effektiv und einfach kann das Abschlussprofilelement genutzt werden, wenn es wenigstens im Wesentlichen senkrecht zum Paneel ausgerichtet ist. Gleiches gilt auch dann, wenn die Dicke des Abschlussprofilelements wenigstens im Wesentlichen der Breite der wenigstens Montagenut entspricht.

Wenn das Abschlussprofilelement wenigstens abschnittsweise an den geschäumten Kunststoff der Kernlage angrenzt, können unnötige weitere Bauteile des Randprofils weitgehend vermieden werden. Um eine dauerhafte und stabile Verbindung zwischen dem geschäumten Kunststoff und der Kernlage bereitzustellen, können diese miteinander verklebt sein. Besonders zweckmäßig ist es, wenn das Grundprofilelement und/oder das Abschlussprofilelement einen Teil der die von dem Kunststoff auszuschäumenden Form bildet. So kann der Kunststoff zuverlässig und einfach die Kernlage ausfüllen. Das führt dann dazu, dass der Kunststoff der Kernlage wenigstens abschnittsweise an das Abschlussprofilelement und/oder das Grundprofilelement angeschäumt ist, was regelmäßig mit einem Verkleben von geschäumtem Kunststoff und Abschlussprofilelement bzw. Grundprofilelement einhergeht.

Um die Funktionalität des Randprofils, insbesondere des Grundprofilelements zu ergänzen und auf weitere Bauteile verzichten zu können, kann das Randprofil insbesondere das Grundprofilelement einen Verbindungsabschnitt zum formschlüssigen, kraftschlüssigen und/oder stoffschlüssigen Verbinden mit einem anderen Paneel aufweisen. Das Fügen der Verbindung kann dann besonders einfach und schnell erfolgen, wenn der Verbindungsabschnitt wenigstens eine Verbindungsnut und/oder wenigstens eine Verbindungsfeder aufweist.

Um eine kompakte Bauform des Grundprofilelements und damit eine hohe Flexibilität bei der Dimensionierung zu ermöglichen, bietet es sich an, wenn der Verbindungsabschnitt gegenüber den Montagenuten in einer Richtung parallel zum Paneel nach außen vorsteht und/oder der äußere Rand des Verbindungsabschnitts von der zugeordneten Decklage wenigstens im Wesentlichen ebenso weit beabstandet ist wie die Öffnung wenigstens einer Montagenut.

Ist das Randprofil wenigstens im Wesentlichen L-förmig ausgebildet, ist das konstruktiv einfach und zudem sehr funktional. Dabei können das Grundprofilelement und das Abschlussprofilelement zudem wenigstens im Wesentlichen die beiden, wenigstens im Wesentlichen rechtwinklig zueinander angeordneten, Schenkel des L-förmigen Randprofils bilden. So können das Grundprofilelement und das Abschlussprofilelement einfach gefertigt werden und dennoch eine hohe Variabilität der Paneele ermöglichen.

Um auf konstruktiv einfache Weise eine dauerhafte und zuverlässige Verbindung zwischen dem Grundprofilelement und dem Abschlussprofilelement zu erhalten, kann das Abschlussprofilelement mit dem Grundprofilelement, insbesondere mit einer Montagenut des Grundprofilelements, verklebt sein.

Bei einer ersten besonders bevorzugten Ausgestaltung des Aufbaus ist das Randprofil, insbesondere der Verbindungsabschnitt, formschlüssig, kraftschlüssig und/oder stoffschlüssig mit dem anderen Paneel verbunden. So kann einfach und zuverlässig ein langlebiger Aufbau gebildet werden. Wenn dann noch das Randprofil des wenigstens einen Paneels Teil der Profilverbindung ist, kann eine weitere konstruktive Vereinfachung unter Verzicht auf weitere unnötige Bauteile erreicht werden.

Besonders zweckmäßig ist es, das wenigstens eine Randprofil eines Paneels zur Bildung einer Eckverbindung zu nutzen. Das Randprofil kann dazu mit einem Eckverbindungselement des anderen Paneels, insbesondere unter Bildung der Profilverbindung, verbunden sein. Für eine dauerhafte und einfach bereitzustellende Verbindung können das Randprofil und das Eckverbindungselement alternativ oder zusätzlich formschlüssig, kraftschlüssig und/oder stoffschlüssig miteinander verbunden sein.

Um einen geschlossenen Aufbau bereitzustellen und Kältebrücken zu vermeiden, bietet es sich an, wenn das Abschlussprofilelement des Randprofils mit dem anderen Paneel verbunden, insbesondere verklebt, ist.

Im Übrigen ist die eingangs genannte Aufgabe bei einer Nutzfahrzeuggruppe nach dem Oberbegriff von Anspruch 16 dadurch gelöst, dass jedes Nutzfahrzeug einen Aufbau nach einem der Ansprüche 11 bis 15 aufweist, dass bei einem Randprofil eines Nutzfahrzeugs ein Abschlussprofilelement in eine bezogen auf das Randprofil äußere Montagenut eingeschoben ist und dass bei einem Randprofil des anderen Nutzfahrzeugs ein Abschlussprofilelement in eine bezogen auf das Randprofil innere Montagenut eingeschoben ist.
Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem ersten erfindungsgemäßen Aufbau umfassend wenigstens ein erstes erfindungsgemäßes Paneel in einer perspektivischen Ansicht,
- Fig. 2A-B: Profilverbindungen des Aufbaus gemäß Fig. 1 zwischen dem ersten erfindungsgemäßen Paneel und einem Dachpaneel bzw. einem Bodenpaneel jeweils in einer Schnittdarstellung,
- Fig. 3A-B: Profilverbindungen eines zweiten erfindungsgemäßen Aufbaus mit einem zweiten erfindungsgemäßen Paneel zwischen dem zweiten erfindungsgemäßen Paneel und einem Dachpaneel bzw. einem Bodenpaneel jeweils in einer Schnittdarstellung.

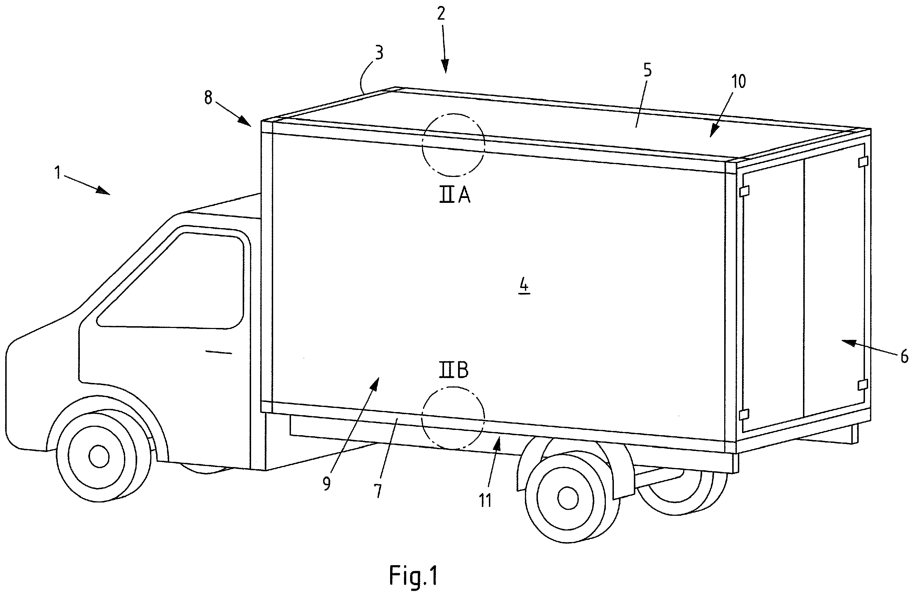

In der Fig. 1 ist ein Nutzfahrzeug 1 mit einem Aufbau 2 in Form eines Kofferaufbaus dargestellt. Bei dem Nutzfahrzeug 1 handelt es sich um einen motorgetriebenen Lastkraftwagen mit einem zulässigen Gesamtgewicht zwischen 3 und 6 Tonnen. Der Aufbau 2 weist eine Stirnwand 3, zwei Seitenwände 4 und ein Dach 5 auf. Die Rückwand 6 des Aufbaus 2 wird beim dargestellten und insoweit bevorzugten Aufbau 2 durch zwei Flügeltüren gebildet, die über Scharniere an einem Rückwandrahmen angeschlagen sind. Es wäre aber auch ein Rolltor oder dergleichen denkbar. Die Stirnwand 3, die Seitenwände 4, das Dach 5 und der Boden 7 werden ferner durch Paneele 8,9,10,11 gebildet.

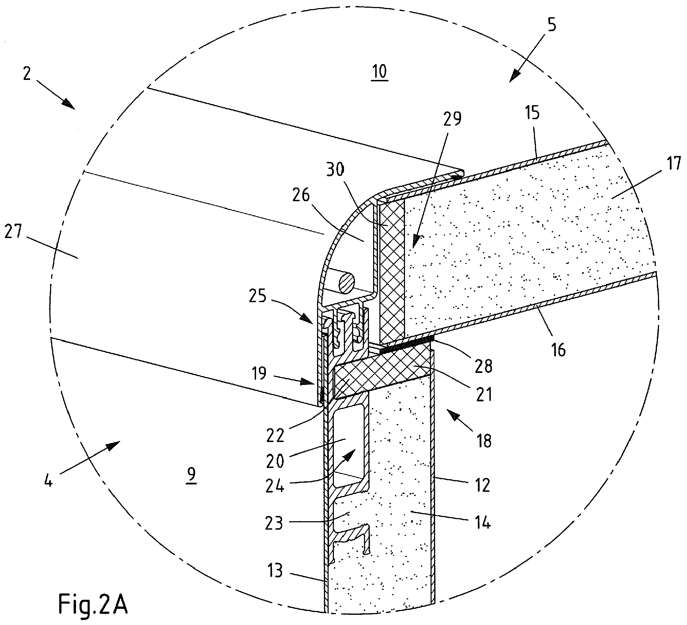

In der Fig. 2A ist die Verbindung zwischen dem Paneel 9 einer Seitenwand 4 und dem Paneel 10 des Dachs 5 dargestellt. Es könnte sich aber auch um die Verbindung zwischen der Stirnwand 3 und dem Dach 5 oder zwischen der Seitenwand 4 und der Stirnwand 3 handeln. Das Paneel 9 der Seitenwand 4 weist zwei äußere Decklagen 12,13 und eine dazwischen vorgesehene Kernlage 14 aus einem geschäumten Kunststoff, insbesondere Polyurethan (PU), auf. Die Decklagen 12,13 sind jeweils mehrschichtig aufgebaut und umfassen eine Strukturlage aus Metall oder aus einem, insbesondere faserverstärkten, Kunststoff. Zudem sind die Decklagen 12,13 an den nach außen weisenden Seiten mit optisch ansprechenden und die Strukturlagen schützenden Folien versehen. Der besseren Anschaulichkeit halber sind die Decklagen 12,13 vorliegend jedoch einzeilig dargestellt. Das Paneel 10 des Dachs 5 weist ebenso zwei Decklagen 15,16 und eine dazwischen angeordnete Kernlage 17 auf, wobei die Decklagen 12,13,15,16 und die Kernlagen 14,17 der Paneele 9,10 einander wenigstens hinsichtlich der Materialien entsprechen, aber gleichwohl unterschiedliche Abmessungen aufweisen können.

Bei dem Paneel 9 der Seitenwand 3 wird der Rand des Paneels 9 im Bereich einer Schmalseite 18 wenigstens teilweise von einem Randprofil 19 gebildet, das ein Grundprofilelement 20 und ein Abschlussprofilelement 21 umfasst. Das Grundprofilelement 20 ist bei dem dargestellten und insoweit bevorzugten Aufbau 2 mit der bezogen auf den Aufbau 2 äußeren Decklage 13 verklebt, während das Abschlussprofilelement 21 mit der anderen Decklage 12, also mit der bezogen auf den Aufbau 2 inneren Decklage 12 verklebt ist. Zudem ist das Abschlussprofilelement 21 in eine von zwei korrespondierenden Montagenuten 22,23 eingeschoben, die in Richtung des Rands des Paneels 9 voneinander beabstandet sind. Grundsätzlich wäre es aber auch möglich, dass nur eine der Montagenuten 22,23 oder noch wenigstens eine weitere Montagenut vorgesehen ist.

Zudem ist das Abschlussprofilelement 21 in der Montagenut 22 mit dem Grundprofilelement 20 verklebt. Die Montagenuten 22,23 sind korrespondierend bzw. gleichartig zueinander ausgebildet, so dass das Abschlussprofilelement 21 prinzipiell genauso in die andere Montagenut 23,22 hätte eingesteckt werden können. Zwischen den Montagenuten 22,23 ist beim dargestellten und insoweit bevorzugten Grundprofilelement 20 ein Hohlprofilabschnitt 24 vorgesehen. Eine der Montgenuten 22 ist also weiter außen als die andere Montagenut 23 angeordnet. So kann das Abschlussprofilelement 21 an zwei verschiedenen Stellen mit ein und demselben Grundprofilelement 20 verbunden werden.

Die entsprechende Schmalseite 18 ist zwischen den Decklagen 12,13 durch das Randprofil 19 verschlossen, so dass das Paneel 9 der Seitenwand 4 nach der Montage des Randprofils 19 ausgeschäumt werden kann. Auf diese Weise wird das Randprofil 19, und zwar sowohl das Grundprofilelement 20 als auch das Abschlussprofilelement 21 von dem Kunststoff der Kernlage 14 beim Ausschäumen angeschäumt. Dadurch werden Grundprofilelement 20 und Abschlussprofilelement 21 mit dem geschäumten Kunststoff bzw. der Kernlage 14 stoffschlüssig verbunden, insbesondere verklebt. Der Kunststoff kann infolge des nachträglichen Ausschäumens beim dargestellten und insoweit bevorzugten Paneel 9 auch die weiter innen liegende und nicht verwendete Montagenut 23 ausschäumen. Es wird so letztlich eine stabile und dauerhafte Verbindung des Randprofils 19 mit dem Rest des Paneels 9 erreicht. Gegenüber den beiden Montagenuten 22,23 und damit auch gegenüber dem Abschlussprofilelement 21 steht ein Verbindungsabschnitt 25 nach außen vor, der Teil des Grundprofilelements 20 ist. Der Verbindungsabschnitt 25 umfasst beim dargestellten und insoweit bevorzugten Paneel 9 zwei Nuten und eine Feder, die mit einem Eckverbindungselement 26 des anderen Paneels 10 formschlüssig und infolge der korrespondierenden Rastvorsprünge auch kraftschlüssig verbunden ist. Wenigstens das Eckverbindungselement 26 und der Verbindungsabschnitt 25 bilden eine Profilverbindung 27 des Aufbaus 2. Der besseren Übersichtlichkeit halber ist nicht dargestellt, dass die zwei Nuten des Verbindungsabschnitts 25 noch einen Klebstoff aufweisen, um zusätzlich eine stoffschlüssige Verbindung bereitzustellen. Die angrenzenden Paneele 9,10 sind zudem über eine Klebeverbindung 28 zwischen dem Abschlussprofilelement 21 und dem angrenzenden Abschnitt des angrenzenden Paneels 10 verbunden. Dabei wird vorliegend der angrenzende Abschnitt des angrenzenden Paneels 10 durch die in Bezug auf den Aufbau 2 innere Decklage 16 des Paneels 10 des Dachs 5 gebildet. An der dargestellten Schmalseite 29 des Paneels 10 des Dachs 5 ist dieses über ein Endprofil 30 verschlossen, wobei die Kernlage 17 anschließend zwischen den Decklagen 15,16 ausgeschäumt worden ist.

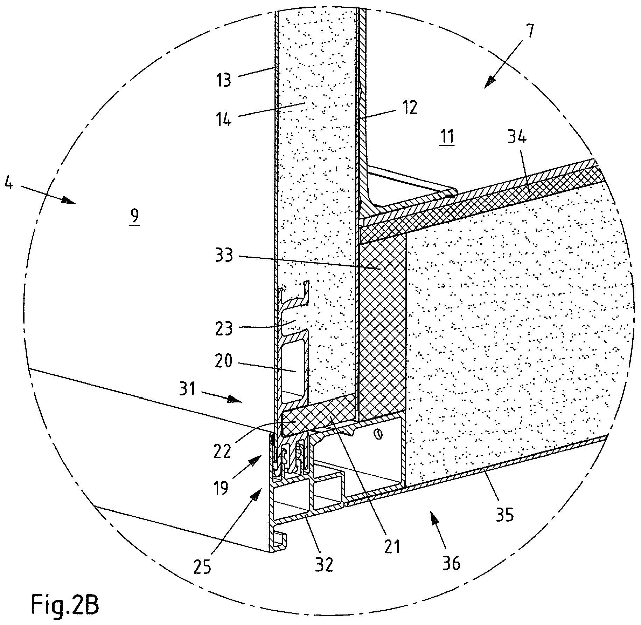

In der Fig. 2B ist die Verbindung der unteren Schmalseite 31 des Paneels 9 der Seitenwand 4 mit dem angrenzenden Bodenpaneel 11 dargestellt. An der unteren Schmalseite 31 ist wiederum ein Randprofil 19 aus einem Grundprofilelement 20 und einem Abschlussprofilelement 21 vorgesehen, das wenigstens teilweise den Rand des Paneels 9 bildet, wie dies bereits zuvor beschrieben worden ist. Einzig ist das mit dem Verbindungsabschnitt 25 des Grundprofilelements 20 verbundene Eckverbindungselement 32 anders ausgebildet als das Eckverbindungselement 26 gemäß Fig. 2A. Zudem ist das Endprofil 33 des Paneels 11 des Bodens 7 zwischen den zugehörigen Decklagen 34,35 mit der bezogen auf den Aufbau 2 inneren Decklage 12 des Paneels 9 der Seitenwand 4 verbunden, insbesondere verklebt. Das Eckverbindungselement 32 und das Endprofil 33 schließen beide die entsprechende Schmalseite 36 des Bodens 7 zwischen den Decklagen 34,35 ab, so dass der Boden 7 anschließend zwischen den Decklagen 34,35 ausgeschäumt werden könnte.

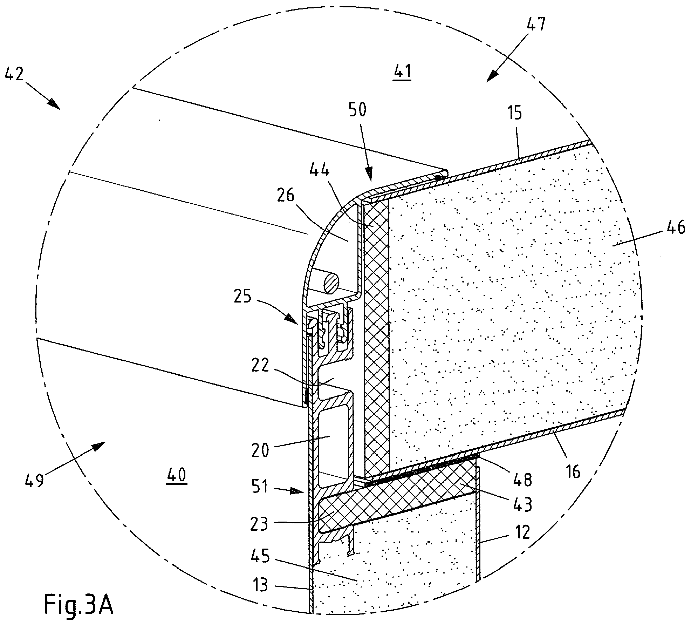

In der Fig. 3A ist die Verbindung gemäß Fig. 2A für zwei dickere Paneele 40,41 dargestellt, um eine höhere thermische Isolation des Aufbaus 42 bereitzustellen. Es werden prinzipiell dieselben Bauteile verwendet, weshalb regelmäßig dieselben Bezugszeichen verwendet worden sind. Im Unterschied zur Fig. 2A sind jedoch das Abschlussprofilelement 43 und das Endprofil 44 breiter ausgebildet, um dem Umstand Rechnung zu tragen, dass die Paneele 40,41 dicker bzw. mit einer dickeren Kernlage 45,46 ausgebildet sind. Ferner ist das Abschlussprofilelement 43 in die andere, weiter innen liegende Montagenut 23 des Grundprofilelements 20 eingeschoben und dort verklebt, um Platz zu machen für das dickere angrenzende Paneel 41 des Dachs 47. Dieses ist so dick ausgebildet, dass die dem Inneren des Aufbaus 42 zugewandte Decklage 16 wenigstens im Wesentlichen bis an das Abschlussprofilelement 43 heranreicht, um mit diesem über eine Klebeverbindung 48 verklebt zu werden. Auch im vorliegenden Fall sind die Paneele 40,41 nach dem Verschließen der entsprechenden Schmalseiten 49,50 über das Randprofil 51 bzw. das Endprofil 44 mit dem Kunststoff der Kernlagen 45,46 ausgeschäumt.

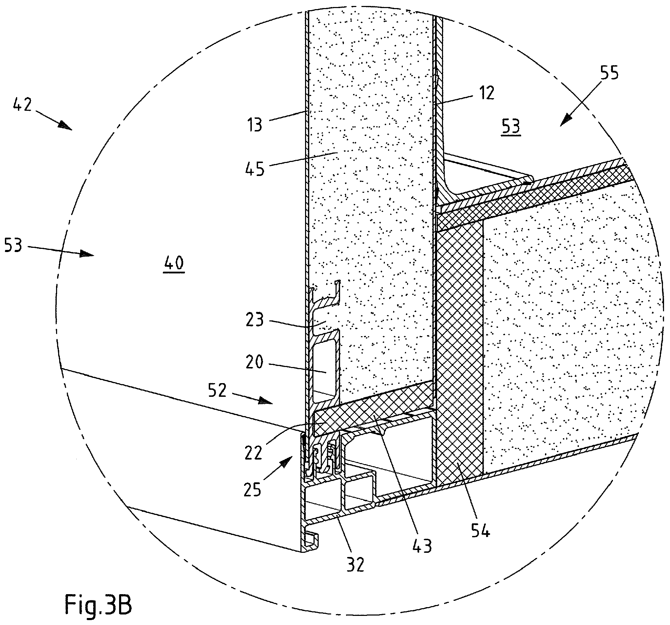

In der Fig. 3B ist die Verbindung der unteren Schmalseite 52 des dickeren Paneels 40 mit dem angrenzenden Bodenpaneel 53 dargestellt. Im Unterschied zur Verbindung gemäß Fig. 2B sind das Abschlussprofilelement 43 des Paneels 40 der Seitenwand 53 und das Endprofil 54 des Paneels 53 des Bodens 55 breiter ausgebildet. Ansonsten ist der Aufbau 42 aber im Wesentlichen unverändert.

### Bezugszeichenliste

- 1: Nutzfahrzeug
- 2: Aufbau
- 3: Stirnwand
- 4: Seitenwand
- 5: Dach
- 6: Rückwand
- 7: Boden
- 8,9,10,11: Paneel
- 12,13: Decklage
- 14: Kernlage
- 15,16: Decklage
- 17: Kernlage
- 18: Schmalseite
- 19: Randprofil
- 20: Grundprofilelement
- 21: Abschlussprofilelement
- 22,23: Montagenut
- 24: Hohlprofil
- 25: Verbindungsabschnitt
- 26: Eckverbindungselement
- 27: Profilverbindung
- 28: Klebeverbindung
- 29: Schmalseite
- 30: Endprofil
- 31: Schmalseite
- 32: Eckverbindungselement
- 33: Endprofil
- 34,35: Decklage
- 36: Schmalseite
- 40,41: Paneel
- 42: Aufbau
- 43: Abschlussprofilelement
- 44: Endprofil
- 45,46: Kernlage
- 47: Dach
- 48: Klebeverbindung
- 49,50: Schmalseite
- 51: Randprofil
- 52: Schmalseite
- 53: Seitenwand
- 54: Endprofil
- 55: Boden

## Patentansprüche

1. Paneel (9,40) zur Bildung eines Aufbaus (2,42) eines Nutzfahrzeugs (1), insbesondere eines Lastkraftwagens, Anhängers oder Sattelaufliegers, mit zwei äußeren Decklagen (12,13) und einer zwischen den Decklagen (12,13) angeordneten Kernschicht (14,45), umfassend einen geschäumten Kunststoff, wobei an wenigstens einer umlaufenden Schmalseite (18,31,49,52) des Paneels (9,40) ein wenigstens abschnittsweise den Rand des Paneels (9,40) bildendes Randprofil (19,51) angeordnet ist,
**dadurch gekennzeichnet, dass**
das Randprofil (19,51) ein einer Decklage (13) zugeordnetes Grundprofilelement (20) und ein der anderen Decklage (12) zugeordnetes Abschlussprofilelement (21,43) umfasst und dass das Abschlussprofilelement (21,43) in wenigstens einer Montagenut (22,23) des Grundprofilelements (20) formschlüssig eingeschoben ist.

2. Paneel nach Anspruch 1,
**dadurch gekennzeichnet, dass**
das Abschlussprofilelement (21,43) in einer von wenigstens zwei korrespondierend zueinander ausgebildeten, insbesondere in die gleiche Richtung geöffneten, und in einer Richtung senkrecht zum Rand und parallel zum Paneel (9,40) voneinander beabstandeten Montagenuten (22,23) des Grundprofilelements (20) formschlüssig eingeschoben ist.

3. Paneel nach Anspruch 1 oder 2,
**dadurch gekennzeichnet, dass**
an wenigstens zwei, vorzugsweise wenigstens drei, insbesondere an wenigstens vier, umlaufenden Schmalseiten (18,31,49,52) des Paneels (9,40) jeweils ein wenigstens abschnittsweise den Rand des Paneels (9,40) bildendes Randprofil (19,51) angeordnet ist, dass die Randprofile (19,51) jeweils ein einer Decklage (13) zugeordnetes Grundprofilelement (20) und ein der anderen Decklage (12) zugeordnetes Abschlussprofilelement (21,43) umfasst und dass die Abschlussprofilelemente (21,43) jeweils in wenigstens eine Montagenut (22,23), insbesondere jeweils in eine von wenigstens zwei korrespondierend zueinander ausgebildeten, vorzugsweise in die gleiche Richtung geöffneten, und in einer Richtung senkrecht zum Rand und parallel zum Paneel (9,40) voneinander beabstandeten Montagenuten (22,23), des Grundprofilelements (20) formschlüssig eingeschoben sind.

4. Paneel nach einem der Ansprüche 1 bis 3,
**dadurch gekennzeichnet, dass**
das Grundprofilelement (20) mit einer Decklage (13) verbunden ist und/oder dass das Abschlussprofilelement (21,43) mit der anderen Decklage (12) verbunden ist und/oder dass die wenigstens eine Montagenut (22,23) des Grundprofilelements (20) sich wenigstens im Wesentlichen über die gesamte in Längsrichtung des Randprofils (19,51) und/oder der zugehörigen Schmalseite (18,31,49,52) erstreckt und/oder dass die wenigstens eine Montagenut (22,23) des Grundprofilelements (20) in einer Richtung wenigstens im Wesentlichen senkrecht zum Paneel (9,40) geöffnet sind.

5. Paneel nach einem der Ansprüche 1 bis 4,
**dadurch gekennzeichnet, dass**
das Abschlussprofilelement (21,43) über wenigstens 30%, vorzugsweise wenigstens 50%, insbesondere wenigstens 70%, der Breite des Randprofils, den äußeren Abschluss des Randprofils (19,51) bildet und/oder dass sich das Abschlussprofilelement (21,43) über wenigstens 50%, vorzugsweise wenigstens 70%, insbesondere wenigstens 90%, der Breite des Randprofils (19,51) erstreckt.

6. Paneel nach einem der Ansprüche 1 bis 5,
**dadurch gekennzeichnet, dass**
das Abschlussprofilelement (21,43) streifenförmig ausgebildet und/oder wenigstens im Wesentlichen senkrecht zum Paneel (9,40) ausgerichtet ist und/oder dass die Dicke des Abschlussprofilelements (21,43) wenigstens im Wesentlichen der Breite der wenigstens einen Montagenut (22,23) entspricht.

7. Paneel nach einem der Ansprüche 1 bis 6,
**dadurch gekennzeichnet, dass**
das Abschlussprofilelement (21,43) wenigstens abschnittsweise an den geschäumten Kunststoff der Kernlage (14,45) angrenzt und/oder mit dem geschäumten Kunststoff der Kernlage (14,45) verklebt ist und dass, vorzugsweise, der Kunststoff der Kernlage (14,45) wenigstens abschnittsweise an das Abschlussprofilelement (21,43) angeschäumt ist.

8. Paneel nach einem der Ansprüche 1 bis 7,
**dadurch gekennzeichnet, dass**
das Grundprofilelement (20) einen Verbindungsabschnitt (25) zum formschlüssigen, kraftschlüssigen und/oder stoffschlüssigen Verbinden mit einem anderen Paneel (10,11,41,53) aufweist und dass, vorzugsweise, der Verbindungsabschnitt (25) wenigstens eine Verbindungsnut und/oder wenigstens eine Verbindungsfeder aufweist.

9. Paneel nach Anspruch 8,
**dadurch gekennzeichnet, dass**
der Verbindungsabschnitt (25) gegenüber der wenigstens einen Montagenut (22,23) in einer Richtung parallel zum Paneel (9,40) nach außen vorsteht und/oder dass der äußere Rand des Verbindungsabschnitts (25) von der zugeordneten Decklage (13) wenigstens im Wesentlichen ebenso weit beabstandet ist wie die Öffnung wenigstens einer Montagenut (22,23).

10. Paneel nach einem der Ansprüche 1 bis 9,
**dadurch gekennzeichnet, dass**
das Randprofil (19,51) wenigstens im Wesentlichen L-förmig ausgebildet ist und dass, vorzugsweise, das Grundprofilelement (20) und das Abschlussprofilelement (21,43) wenigstens im Wesentlichen die beiden, wenigstens im Wesentlichen rechtwinklig zueinander angeordneten, Schenkel des L-förmigen Randprofils (19,51) bilden.

11. Paneel nach einem der Ansprüche 1 bis 10,
**dadurch gekennzeichnet, dass**
das Abschlussprofilelement (21,43) mit dem Grundprofilelement (20), insbesondere mit einer Montagenut (22,23) des Grundprofilelements (20), verklebet ist.

12. Aufbau (2,42) eines Nutzfahrzeugs (1), insbesondere eines Lastkraftwagens, Anhängers oder Sattelaufliegers, mit wenigstens zwei Paneelen (9,10,11,40,41,53), vorzugsweise umfassend ein Stirnwandpaneel, ein Seitenwandpaneel und/oder ein Dachpaneel und mit wenigstens einer Profilverbindung (27) zum Verbinden der beiden Paneele (9,10,11,40,41,53) über Eck,
**dadurch gekennzeichnet, dass** wenigstens ein Paneel (9,40) nach einem der Ansprüche 1 bis 10 ist.

13. Aufbau nach Anspruch 12,
**dadurch gekennzeichnet, dass**
das Randprofil (19,51) formschlüssig, kraftschlüssig und/oder stoffschlüssig mit dem anderen Paneel (10,11,41,53) verbunden ist und dass vorzugsweise, das Randprofil (19,51) des wenigstens einen Paneels (9,40) Teil der Profilverbindung (27) ist.

14. Aufbau nach Anspruch 12 oder 13,
**dadurch gekennzeichnet, dass**
das Randprofil (19,51) mit einem Eckverbindungselement (26,32) des anderen Paneels (10,11,41,53), insbesondere unter Bildung der Profilverbindung (27), verbunden ist und dass, vorzugsweise, das Randprofil (19,51) und das Eckverbindungselement (26,32) formschlüssig, kraftschlüssig und/oder stoffschlüssig verbunden sind.

15. Aufbau nach einem der Ansprüche 12 bis 14,
**dadurch gekennzeichnet, dass**
das Abschlussprofilelement (21,43) des Randprofils (19,51) mit dem anderen Paneel (10,11,41,53) verbunden, insbesondere verklebt, ist.

16. Nutzfahrzeuggruppe umfassend zwei Nutzfahrzeuge (1), insbesondere Lastkraftwagen, Anhänger oder Sattelauflieger,
**dadurch gekennzeichnet, dass**
jedes Nutzfahrzeug (1) einen Aufbau (2,42) nach einem der Ansprüche 11 bis 15 aufweist, dass bei einem Randprofil (19) eines Nutzfahrzeugs (1) ein Abschlussprofilelement (21) in eine bezogen auf das Randprofil (19) äußere Montagenut (22) eingeschoben ist und dass bei einem Randprofil (51) des anderen Nutzfahrzeugs ein Abschlussprofilelement (43) in eine bezogen auf das Randprofil (51) innere Montagenut (23) eingeschoben ist.
